# EUROPÄISCHE PATENTANMELDUNG

(11) **EP 1 369 027 A1**
(43) Veröffentlichungstag der Anmeldung: **10.12.2003**
(21) Anmeldenummer: 03010545.6
(22) Anmeldetag: 10.05.2003
(51) Int. Cl.: A01G 1/12, E01H 1/08, A01D 43/06

(54) **Aufnahme- und Sammelgerät für stückiges Gut**

(30) Priorität: 17.05.2002 DE 10222004
(71) Anmelder: Fritz Sperber GmbH & Co., 90765 Fürth (DE)
(72) Erfinder: Schmidt, Hagen, 90765 Fürth (DE); Hornfischer, Georg, 91735 Muhr am See (DE)
(74) Vertreter: Nordmann, Hardo

(57) **Zusammenfassung**

Das Gerät besitzt eine Turbine (12), die zum Ansaugen des stückigen Guts (g), z. B. von Mähgut, sowie zum Zerkleinern desselben vorgesehen ist. Es besitzt weiter einen Sammelbehälter (18), in den das stückige Gut (g) und die Luft (1) einführbar sind. Eine Einrichtung (20) im Sammelbehälter (18) dient zum Trennen des stückigen Guts (g) von der Luft (1). Über eine Luftaustrittsöffnung (22) kann die abgetrennte Luft (1) weitergeleitet werden. Um die Saugleistung zu erhöhen oder den Lärmpegel der Turbine (12) zu senken, ist erfindungsgemäß an die Luftaustrittsöffnung (22) ein Luftgebläse (26) angeschlossen, mit dem die Luft (1) absaugbar ist. Die Luft (1) wird an die Umgebung abgegeben. Das Gerät wird bevorzugt bei einem Traktor eingesetzt.

## Beschreibung

Die Erfindung bezieht sich auf ein Aufnahme- und Sammelgerät für stückiges Gut, beispielsweise für Schnittgut, Mähgut, Laub oder Straßenschmutz,
a) mit einer Turbine, die zum Ansaugen des stückigen Guts und von Luft sowie zum Zerkleinern des stückigen Guts vorgesehen ist,
b) mit einem Sammelbehälter, in den das stückige Gut und die Luft einbringbar sind,
c) mit einer Einrichtung zum Trennen des stückigen Guts von der Luft und
d) mit einer Luftaustrittsöffnung, durch die die abgetrennte Luft abgebbar ist.

Unter dem Begriff "Turbine" wird hier also eine Einrichtung verstanden, die zum Ansaugen von stückigem Gut und Luft sowie zum Zerkleinern des stückigen Guts geeignet ist. Eine solche Einrichtung wird in der Literatur gelegentlich auch als "Ladegebläse" oder als "Sauggebläse" (vgl. EP 0 478 982) bezeichnet. Insbesondere kann es sich um einen Radialventilator handeln.

Ein Aufnahme- und Sammelgerät der genannten Art kann im privaten, aber auch im kommunalen Bereich zum Absaugen von stückigem Gut eingesetzt werden. Es arbeitet beispielsweise zusammen mit einem Traktor, mit einer Mähmaschine, mit der Schnittgut abgesaugt wird, mit einer Kehrmaschine, mit der Straßendreck aufgenommen und abtransportiert wird, oder mit einem Laubsauger, mit dem am Straßenrand oder unter Bäumen Laub aufgenommen wird. Unter dem Begriff "stückiges Gut" wird also vorliegend ein aus Teilen bestehendes Material verstanden, z. B. also Schnittgut, Mähgut und Laub, aber auch mit größeren Teilen versetztes Gut, wie z. B. Straßenstaub, der Glasflaschen und/oder Blechdosen enthält. Wichtig hierbei ist, dass die im Aufnahme- und Sammelgerät vorhandene Turbine nicht nur zum Transport, sondern auch zum Zerkleinern der Teile des stückigen Guts geeignet ist, damit im Sammelbehälter eine kompakte Lagerung möglich ist. Die Material-Zerkleinerung führt also bei vorgegebenem Sammelbehälter-Volumen zu einer relativ großen Aufnahmekapazität.

Ein Gerät der eingangs genannten Art, das speziell zum Einsammeln von Schnittgut dient und vom Motor eines Traktors angetrieben wird, ist als Gerät GAH 750 bei der Firma Fritz Sperber GmbH & Co., 90765 Fürth, auf dem Markt erhältlich.

Die Turbine eines Geräts der erwähnten Art wird mit einer relativ hohen Drehzahl angetrieben. Diese hohe Drehzahl und damit eine hohe Leistung werden benötigt, wenn der Sammelbehälter weitgehend gefüllt ist und dessen Inhalt der weiteren Befüllung zunehmend Widerstand entgegensetzt. In der Regel läuft die Turbine auch dann mit hoher Drehzahl, wenn sich erst wenig stückiges Gut im Sammelbehälter befindet und der Widerstand bei der Befüllung noch gering ist. Durch die hohe Drehzahl ergibt sich ein hoher Lärmpegel, der nicht nur den Bediener des Aufnahme- und Sammelgeräts, sondern auch die Umgebung beeinträchtigt.

Als weiterer Nachteil ist es anzusehen, dass die Einrichtung zum Trennen des stückigen Guts von der Luft, die im allgemeinen mit einem Sieb oder Filter ausgestattet ist, bei der erforderlich hohen Drehzahl, insbesondere bei niederem Befüllungsgrad des Sammelbehälters, den Durchtritt von Staub ermöglicht. Dies führt ebenfalls zur Beeinträchtigung des Bedieners und der Umgebung.

Aufgabe der Erfindung ist es, ein Gerät der eingangs genannten Art derart auszugestalten, dass sich bei gleicher Saugleistung eine Verringerung der Lärm- und/oder Staubbelästigung oder aber bei gleicher Lärm- und/oder Staubbelastung eine Vergrößerung der Saugleistung ergibt.

Die Erfindung beruht auf der Erkenntnis, dass dies gelingt, wenn durch Evakuieren der Luft aus dem Sammelbehälter der Leistungsbedarf für die Turbine verringert wird, so dass diese mit verringerter Drehzahl betrieben werden kann oder aber bei gleicher Drehzahl eine höhere Saugleistung aufweist.

Die genannte Aufgabe wird demgemäß erfindungsgemäß dadurch gelöst, dass an die Luftaustrittsöffnung ein Luftgebläse angeschlossen ist, mit dem die abgetrennte Luft absaugbar ist.

Dieses zusätzlich eingesetzte Luftgebläse entnimmt die abgetrennte Luft aus dem Sammelbehälter, so dass sich bei gleicher Drehzahl eine Erhöhung der Saugleistung ergibt. Da nunmehr auch eine Verringerung der Drehzahl möglich ist, ergibt sich in diesem Fall insgesamt eine Reduktion der Lärmund Staubemission, denn die Laufgeräusche des Luftgebläses fallen kaum ins Gewicht.

Die Turbine kann bei Verwendung des Luftgebläses vor, aber auch hinter dem Sammelbehälter angeordnet sein.

Die Antriebswelle kann von dem Motor eines Traktors angetrieben werden. Von Vorteil ist es, wenn die Turbine und das Luftgebläse von ein und derselben Antriebswelle antreibbar sind.

Zweckmäßigerweise ist die Einrichtung zum Trennen des stückigen Guts von der Luft im Sammelbehälter untergebracht. Die Einrichtung umfasst dabei bevorzugt einen Filter zum Auffangen oder Abtrennen der Teilchen des stückigen Guts. Sie kann auch Bleche zum Abbremsen des stückigen Guts besitzen.

Bei einer Anordnung, bei der die Turbine strömungstechnisch vor dem Sammelbehälter angeordnet ist, wird man i. a. so vorgehen, dass von der Luftaustrittsöffnung, die im oberen Bereich des Sammelbehälters angeordnet ist, ein Luftkanal nach unten zum Luftgebläse führt. Hier kann auch vorgesehen sein, dass von der Turbine ein Transportkanal nach oben zu einer im Sammelbehälter angeordneten Eintrittsöffnung führt.

Der Sammelbehälter, der Luftkanal und/oder der Transportkanal kann jeweils aus einem Metallblech, bevorzugt aber aus Kunststoff bestehen.

Weiterhin kann vorgesehen sein, dass die Antriebswelle im wesentlichen horizontal ausgerichtet ist und über ein Umlenkgetriebe mit einer von einem Motor ausgehenden Motorwelle antreibbar ist.

Zur Unterstützung der Lärmdämpfung kann auch ein Schalldämpfer eingesetzt werden. Dieser kann direkt oder indirekt an die Luft-Ausgangsöffnung des Luftgebläses angeschlossen sein.

Die Lage und Richtung der Luft-Ausgangsöffnung des Luftgebläses bestimmen zu einem gewissen Grad den vom Gerät ausgehenden Lärmpegel. Um den Lärm gezielt zu lenken, kann bevorzugt die Luft-Ausgangsöffnung mit Lamellen versehen sein. Diese können in ihrer Neigung einstellbar sein, so dass das Gerät an verschiedene Einsatzfälle derart angepasst werden kann, dass sich minimale Lärmbelästigung ergibt.

Ausgehend von diesem Gedanken kann es auch von Vorteil sein, wenn das Luftgebläse mit einer Luft-Ausgangsöffnung verbunden ist, bei der die Austrittsrichtung für austretende Luft einstellbar ist.

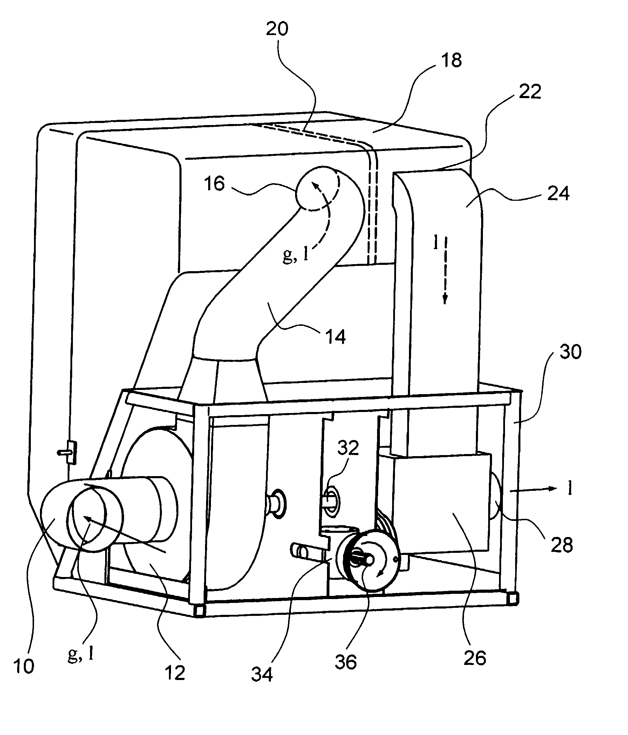

Ein Ausführungsbeispiel der Erfindung wird im folgenden anhand einer Figur näher erläutert. Die Figur zeigt im Prinzip ein Saug- und Blasgerät zum Aufnehmen und Einsammeln von Mähgut, wie Gras, das von einer (nicht dargestellten) Mähmaschine angeliefert wird.

Nach der Figur wird das stückige Gut g, speziell hier das Mähgut, zusammen mit Luft 1 dem abgebogenen Einführungsstutzen 10 einer Turbine 12 zugeführt. Die Turbine 12 ist zum Fördern, aber auch zum Zerkleinern des Guts g eingerichtet. Sie saugt das Gut g und die Luft 1 an und fördert diese sodann nach oben in einen Transportkanal 14. Der Transportkanal 14 besitzt hier einen runden Querschnitt. Er ist an eine Eintrittsöffnung 16 angeschlossen, die im oberen Teil eines (in der Tiefe verkleinert dargestellten) Sammelbehälters 18 angeordnet ist.

Der Sammelbehälter 18 ist hier als abgeschrägter geschlossener Kasten aus Kunststoff ausgebildet. Er enthält eine gestrichelt angedeutete Einrichtung 20 zum Trennen des stückigen Guts g von der Luft 1. Insbesondere besitzt die Einrichtung 20 einen nicht näher dargestellten Filter zum Auffangen der Teilchen des stückigen Guts g und Bleche zum Abbremsen des stückigen Guts g. Die Teilchen werden bis zur Entleerung im Sammelbehälter 18 gesammelt.

Im oberen Teil des Sammelbehälters 18 ist eine Luftaustrittsöffnung 22 zum Austritt der abgetrennten Luft 1 vorgesehen. An diese Luftaustrittsöffnung 22 ist ein Luftkanal 24 angeschlossen, der hier einen rechteckigen Querschnitt besitzt und der nach unten zu einem Luftgebläse 26 führt. Mit diesem Luftgebläse 26 wird die Luft 1 aus dem Sammelbehälter 18 abgesaugt. Die Luft 1 wird aus der Luft-Ausgangsöffnung 28 des Luftgebläses 26 kontrolliert abgegeben, und zwar ins Freie, also an die Umgebung. Dazu können hier (nicht gezeigte) Lamellen vorgesehen sein, deren Neigung bevorzugt einstellbar ist, die also verschwenkbar sind. Somit ist die Austrittsrichtung der austretenden Luft 1 einstellbar, was zur Anpassung an die Bedürfnisse des Betriebs dient. An die Luft-Ausgangsöffnung 28 kann auch ein Schalldämpfer (nicht dargestellt) angeschlossen sein.

Die Turbine 12, der Sammelbehälter 18, das Luftgebläse 26 sowie die Kanäle 14 und 24 sind in einem Gestell 30 festgehalten. Die Turbine 12 und das Luftgebläse 26 werden dabei gemeinsam von einer horizontal ausgerichteten Antriebswelle 32 angetrieben. Diese Antriebswelle 32 ist über ein Umlenkgetriebe 34 und eine Welle 36 mit der (nicht gezeigten) Welle des Motors eines Traktors verbunden. Natürlich können auch getrennte Antriebswellen vorgesehen sein.

Wichtig bei dem in der Figur dargestellten Gerät ist die Kombination von Turbine 12 als Blaseinheit und Luftgebläse 26 als Saugeinheit. Gegenüber herkömmlichen Geräten kann die Drehzahl der Turbine 12 reduziert sein, so dass sich ein verringerter Lärmpegel und damit auch ein verringerter Staubausstoß an die Umgebung ergibt.

### Bezugszeichenliste

- 10: Einführungsstutzen
- 12: Turbine
- 14: Transportkanal
- 16: Eintrittsöffnung
- 18: Sammelbehälter
- 20: Einrichtung zum Trennen
- 22: Luftaustrittsöffnung
- 24: Luftkanal
- 26: Luftgebläse
- 28: Luft-Ausgangsöffnung
- 30: Gestell
- 32: Antriebswelle
- 34: Umlenkgetriebe
- 36: Welle

## Patentansprüche

1. Aufnahme- und Sammelgerät für stückiges Gut, beispielsweise für Schnittgut, Mähgut, Laub oder Straßenschmutz,
a) mit einer Turbine (12), die zum Ansaugen des stückigen Guts (g) und von Luft (1) sowie zum Zerkleinern des stückigen Guts (g) vorgesehen ist,
b) mit einem Sammelbehälter (18), in den das stückige Gut (g) und die Luft (1) einbringbar sind,
c) mit einer Einrichtung (20) zum Trennen des stückigen Guts (g) von der Luft (1) und
d) mit einer Luftaustrittsöffnung (22), durch die die abgetrennte Luft (1) abgebbar ist,
**dadurch gekennzeichnet, dass** an die Luftaustrittsöffnung (22) ein Luftgebläse (26) angeschlossen ist, mit dem die abgetrennte Luft (1) absaugbar ist.

2. Gerät nach Anspruch 1, **dadurch gekennzeichnet**, die Turbine (12) und das Luftgebläse (26) von derselben Antriebswelle (32) antreibbar sind.

3. Gerät nach Anspruch 1 oder 2, **dadurch gekennzeichnet, dass** die Antriebswelle (32) von dem Motor eines Traktors antreibbar ist.

4. Gerät nach einem der Ansprüche 1 bis 3, **dadurch gekennzeichnet, dass** die Einrichtung (20) zum Trennen des stückigen Guts (g) von der Luft (1) im Sammelbehälter (18) untergebracht ist.

5. Gerät nach einem der Ansprüche 1 bis 4, **dadurch gekennzeichnet, dass** die Einrichtung (20) einen Filter zum Auffangen der Teilchen des stückigen Guts (g) umfasst.

6. Gerät nach einem der Ansprüche 1 bis 5, **dadurch gekennzeichnet, dass** die Einrichtung (20) Bleche zum Abbremsen des stückigen Guts (g) umfasst.

7. Gerät nach einem der Ansprüche 1 bis 6, **dadurch gekennzeichnet, dass** von der Luftaustrittsöffnung (22), die im oberen Bereich des Sammelbehälters (18) angeordnet ist, ein Luftkanal (24) nach unten zum Luftgebläse (26) führt.

8. Gerät nach einem der Ansprüche 1 bis 7, **dadurch gekennzeichnet, dass** von der Turbine (12) ein Transportkanal (14) nach oben zu einer im Sammelbehälter (18) angeordneten Eintrittsöffnung (16) führt.

9. Gerät nach einem der Ansprüche 1 bis 8, **dadurch gekennzeichnet, dass** der Sammelbehälter (18) aus Kunststoff besteht.

10. Gerät nach einem der Ansprüche 7 bis 9, **dadurch gekennzeichnet, dass** der Luftkanal (24) und/oder der Transportkanal (14) aus Kunststoff besteht.

11. Gerät nach einem der Ansprüche 1 bis 10, **dadurch gekennzeichnet, dass** die Antriebswelle (32) im wesentlichen horizontal ausgerichtet ist und über ein Umlenkgetriebe (34) mit einer von einem Motor ausgehenden Motorwelle (36) antreibbar ist.

12. Gerät nach einem der Ansprüche 1 bis 11, **dadurch gekennzeichnet, dass** das Luftgebläse (26) eine Luft-Ausgangsöffnung (28) besitzt, an die ein Schalldämpfer angeschlossen ist.

13. Gerät nach einem der Ansprüche 1 bis 12, **dadurch gekennzeichnet, dass** das Luftgebläse (26) eine Luft-Ausgangsöffnung (28) besitzt, die mit Lamellen versehen ist.

14. Gerät nach Anspruch 13, **dadurch gekennzeichnet, dass** die Neigung der Lamellen einstellbar ist.

15. Gerät nach einem der Ansprüche 1 bis 14, **dadurch gekennzeichnet, dass** das Luftgebläse (26) mit einer Luft-Ausgangsöffnung (28) verbunden ist, bei der die Austrittsrichtung für austretende Luft (1) einstellbar ist.
